# EUROPÄISCHE PATENTSCHRIFT

(11) **EP 3 205 004 B1**
(45) Veröffentlichungstag und Bekanntmachung des Hinweises auf die Patenterteilung: **02.06.2021**
(21) Anmeldenummer: 15744944.8
(22) Anmeldetag: 03.08.2015
(51) Int. Cl.: H02K 9/06, H02K 1/20, H02K 17/16

(54) **KÄFIGLÄUFER FÜR EINE ELEKTRISCHE ASYNCHRONMASCHINE MIT EINEN KURZSCHLUSSRING STABILISIERENDER STÜTZSCHEIBE**
SQUIRREL-CAGE ROTOR FOR AN ASYNCHRONOUS ELECTRIC MACHINE HAVING A SUPPORT DISK THAT STABILIZES A SHORT-CIRCUIT RING
ROTOR À CAGE DESTINÉ À UN MOTEUR ÉLECTRIQUE ASYNCHRONE, MUNI D'UN DISQUE DE SUPPORT STABILISANT LA BAGUE DE COURT-CIRCUIT

(30) Priorität: 07.10.2014 DE 102014220267
(43) Veröffentlichungstag der Anmeldung: 16.08.2017
(73) Patentinhaber: Robert Bosch GmbH, 70442 Stuttgart (DE)
(72) Erfinder: LAUE, Harald, 73733 Esslingen (DE); KELLETER, Arndt, 71729 Erdmannhausen (DE); SCHUERG, Stefan, 71636 Ludwigsburg (DE); SCHECHTERLE, Jochen, 73773 Aichwald (DE)
(86) Internationale Anmeldenummer: PCT/EP2015/067814
(87) Internationale Veröffentlichungsnummer: WO 2016/055186

(56) Entgegenhaltungen:
- WO-A2-2014/124762
- CH-A- 232 999
- DE-A1-102005 030 798

## Beschreibung

### Gebiet der Erfindung

Die Erfindung betrifft einen Käfigläufer für eine elektrische Asynchronmaschine.

### Hintergrund der Erfindung

Elektrische Maschinen werden für vielfältige Zwecke eingesetzt, insbesondere als Antriebe und/oder Generatoren in Kraftfahrzeugen wie beispielsweise Elektro- oder Hybridfahrzeugen. Hierbei haben sich Asynchronmaschinen als vorteilhaft erwiesen, unter anderem da bei ihnen auf teure Permanentmagnete verzichtet werden kann.

Bei einer Asynchronmaschine wird meist in einem Rotor, der relativ zu einem Stator drehbar gelagert ist, ein sogenannter Kurzschlusskäfig vorgesehen. Der Rotor der Asynchronmaschine wird daher auch als Käfigläufer oder Kurzschlussläufer bezeichnet. Der Kurzschlusskäfig weist längliche Kurzschlussstäbe auf, die im Allgemeinen parallel oder leicht schräg zu einer Rotationsachse, d.h. in Axialrichtung verlaufend angeordnet sind. Die Kurzschlussstäbe sind in einem Rotorgrundkörper gehalten. Der Rotorgrundkörper ist meist als Lamellenpaket aus einer Vielzahl geeignet in Form gestanzter und axial nebeneinander gestapelter Blechlamellen ausgebildet. Die Kurzschlussstäbe sind in freigestanzte Ausnehmungen oder Nuten in dem Lamellenpaket eingelegt. An ihren Enden sind die Kurzschlussstäbe durch Kurzschlussringe, welche an beiden stirnseitigen Enden des Rotorgrundkörpers angeordnet sind, elektrisch miteinander verbunden.

Ein Beispiel eines Kurzschlussläufers einer Asynchronmaschine wird in DE 195 42 962 C1 beschrieben.

Während des Betriebs der elektrischen Maschine werden in dem Kurzschlusskäfig aufgrund variierender Magnetfelder starke Ströme induziert. Um Widerstandsverluste gering zu halten, besteht der Kurzschlusskäfig im Allgemeinen aus einem Material mit hoher elektrischer Leitfähigkeit.

Beispielsweise wird Kupfer, Aluminium oder eine Legierung mit diesen Stoffen verwendet. Allerdings weisen diese Materialien meist eine verhältnismäßig geringe mechanische Festigkeit auf. Wenn der Rotor auf hohe Drehzahlen beschleunigt wird, neigen die Komponenten des Kurzschlusskäfigs, insbesondere die freiliegenden Kurzschlussringe, dazu, sich aufgrund von Fliehkräften zu verformen. Eine Verringerung der Festigkeit der Komponenten, wie sie bei den im Betrieb häufig vorkommenden hohen Temperaturen auftreten kann, kann Deformationstendenzen noch verstärken.

Um Deformationen der Kurzschlussringe zu vermeiden, werden diese herkömmlich durch von außen umgreifende Bandagen gestützt, wie sie beispielsweise in dem Dokument DE 10 2005 030798 A1 (SIEMENS AG [DE]) 4. Januar 2007 (2007-01-04), oder WO 2014/124762 A2 (BOSCH GMBH ROBERT [DE]) 21. August 2014 (2014-08-21) oder CH 232 999 A (LICENTIA GMBH [DE]) 30. Juni 1944 (1944-06-30) des Standes der Technik offenbart sind. Ein Bandagieren des Rotors bzw. der Kurzschlussringe kann jedoch einen aufwändigen Arbeitsprozess erfordern und somit Kosten und Komplexität der Asynchronmaschine erhöhen.

### Offenbarung der Erfindung

Ausführungsformen der vorliegenden Erfindung können in vorteilhafter Weise ermöglichen, Kurzschlussringe eines Käfigläufers mit geringem Montage- und Kostenaufwand zu stabilisieren. Außerdem können verbesserte Funktionalitäten wie z.B. eine verbesserte Kühlung, eine vereinfachte Wuchtbarkeit, etc. erreicht werden.

Gemäß einem ersten Aspekt der Erfindung wird ein Käfigläufer für eine elektrische Asynchronmaschine vorgeschlagen, welcher ein Lamellenpaket aus einer Vielzahl von in Axialrichtung nebeneinander gestapelten Blechlamellen und einen Kurzschlusskäfig aufweist. Die Kurzschlussstäbe des Kurzschlusskäfigs erstrecken sich in Axialrichtung durch das Lamellenpaket und sind jeweils durch einen Kurzschlussring an Stirnflächen des Lamellenpakets miteinander verbunden. Der Käfigläufer zeichnet sich dadurch aus, dass axial zwischen einem der Kurzschlussringe und einer benachbarten axial äußersten der Blechlamellen eine Stützscheibe angeordnet ist. Die Stützscheibe ist in einem Zentralbereich parallel zu den Blechlamellen ausgebildet. In einem randnahen Bereich ist die Stützscheibe axial weg von dem Lamellenpaket, also in einer vom Lamellenpaket abgewandten Richtung, umgebogen.

Ideen zu Ausführungsformen der vorliegenden Erfindung können unter anderem als auf den nachfolgend beschriebenen Gedanken und Erkenntnissen beruhend angesehen werden.

Um die mechanisch wenig stabilen Kurzschlussringe des Kurzschlusskäfigs gegen radiale Deformation beispielsweise aufgrund bei hohen Drehzahlen auftretender starker Fliehkräfte abzustützen wird vorgeschlagen, auf nachträglich anzubringende Bandagen zu verzichten und stattdessen Stützscheiben vorzusehen, welche ähnlich wie eine Decklamelle an einer Stirnfläche des Lamellenpakets angeordnet werden können und welche mit einem axial weg von dem Lamellenpaket umgebogenen randnahen Bereich den Kurzschlussring stabilisieren können.

Unter der "Axialrichtung" soll in diesem Zusammenhang eine Richtung längs durch den Käfigläufer, d.h. im Wesentlichen parallel oder leicht schräg zu einer Rotationsachse des Käfigläufers, verstanden werden.

Die Stützscheibe kann eine höhere mechanische Festigkeit aufweisen als die Blechlamellen. Die das Lamellenpaket bildenden Blechlamellen weisen im Allgemeinen nur eine Dicke von weniger als 0,4mm auf und sind nicht hinsichtlich mechanischer Stabilität sondern hinsichtlich ihrer magnetischen Eigenschaften optimiert. Im Gegensatz hierzu können die Stützscheiben eine bessere mechanische Festigkeit aufweisen, um mit ihrem axial nach außen gebogenen randnahen Bereich den Kurzschlussring abzustützen und zu stabilisieren.

Unter einer "höheren mechanischen Festigkeit" der Stabilisierungsstäbe im Vergleich zu den Kurzschlussringen soll in diesem Zusammenhang verstanden werden, dass sich die Stabilisierungsstäbe bei mechanischer Belastung, insbesondere bei in Radialrichtung des Käfigläufers wirkender mechanischer Belastung, weniger deformieren als die Kurzschlussringe. Insbesondere soll ein E-Modul des für die Stabilisierungsstäbe verwendeten Materials größer sein als ein E-Modul des für den Kurzschlussring verwendeten Materials.

Beispielsweise kann die Stützscheibe eine größere Dicke aufweisen als die Blechlamellen. Insbesondere kann die Stützscheibe eine Dicke von mehr als 0,5mm, vorzugsweise mehr als 1mm aufweisen. Aufgrund der verhältnismäßig großen Materialdicke kann die Stützscheibe eine hohe mechanische Festigkeit erhalten.

Alternativ oder ergänzend kann die Stützscheibe aus einem mechanisch stabileren Material bestehen als die Blechlamellen und/oder als die Kurzschlussringe. Die Kurzschlussringe bestehen meist aus elektrisch gut leitfähigem, aber mechanisch wenig stabilem Material wie Aluminium oder Kupfer oder entsprechenden Legierungen. Die Blechlamellen bestehen meist aus Magnetblech, welches ebenfalls keine hohen Stabilitätswerte erreicht. Im Gegensatz hierzu können die Stützscheiben z.B. aus Stahl, Edelstahl, hochfesten Metalllegierungen oder ähnlichem bestehen.

Die Stützscheibe kann ein Stanzbiegebauteil oder ein tiefgezogenes Bauteil sein. Sowohl Stanzbiegebauteile als auch tiefgezogene Bauteile können einfach und kostengünstig gefertigt werden. Als Stanzbiegebauteil kann die Stützscheibe entweder bereits vor ihrer Montage an dem Lamellenpaket in die gewünschte Form mit dem umgebogenen randnahen Bereich gebracht werden oder sie kann zunächst als ebene Scheibe ohne umgebogenen randnahen Bereich montiert werden und erst nachdem beispielsweise der Kurzschlussring ausgebildet wurde umgebördelt und in die gewünschte Form gebracht werden. Als tiefgezogenes Bauteil wird die Stützscheibe vorab in die gewünschte Form gebracht und an dem Lamellenpaket montiert.

Die Stützscheibe kann nahe dem Außenrand derart umgebogen sein, dass sich der randnahe Bereich in Axialrichtung erstreckt. Während der zentrale Bereiche der Stützscheibe sich parallel zu den Lamellenblechen, d.h. in radialer Richtung, erstreckt, kann der randnahe Bereich sich somit quer, insbesondere rechtwinklig, zu diesem zentralen Bereich erstrecken und dabei den benachbarten Kurzschlussring stabilisieren.

Insbesondere kann der randnahe Bereich der Stützscheibe den angrenzenden Kurzschlussring von radial außen umgreifen. Mit anderen Worten kann die Stützscheibe in ihrem randnahen Bereich derart umgebogen sein, dass sich eine radial nach innen gerichtete Oberfläche der Stützscheibe im randnahen Bereich an eine radial nach außen gerichtete Oberfläche des Kurzschlussringes anlegt und den Kurzschlussring somit gegen Fliehkräfte abstützen kann. Die Stützscheibe kann hierzu beispielsweise zunächst als flache Scheibe montiert werden und erst anschließend nach Ausbilden des Kurzschlussrings in ihrem Randbereich umgebogen und an die radiale Außenfläche des Kurzschlussrings angelegt werden.

Alternativ oder ergänzend hierzu kann der randnahe Bereich durch den angrenzenden Kurzschlussring hindurch verlaufen. Beispielsweise kann die Stützscheibe bereits als vorab in Form gebrachtes und mit dem nach außen gekrümmten Randbereich versehenes Bauteil an dem Lamellenpaket angeordnet werden. Anschließend kann der Kurzschlusskäfig mit seinen Stäben und Kurzschlussringen beispielsweise hochdruckgegossen werden. Dabei kann der nach außen gekrümmte Randbereich der Stützscheibe mit eingegossen werden, sodass er anschließend einen integralen Bestandteil des Kurzschlussrings bildet. Aufgrund ihrer höheren mechanischen Festigkeit kann die Stützscheibe dabei den sie teilweise umschließenden Kurzschlussring stabilisieren und insbesondere gegenüber hohen Fliehkräften abstützen.

In einer speziellen Ausgestaltung kann die Stützscheibe derart ausgebildet sein, dass der randnahe Bereich in Axialrichtung über den Kurzschlussring übersteht. Mit anderen Worten kann der umgebogene randnahe Bereich der Stützscheibe so groß dimensioniert sein, dass er axial über den Kurzschlussring hinaus abragt. Der überstehende Bereich des Stützrings kann beispielsweise zum subtraktiven Wuchten des Rotors verwendet werden. Dabei wirkt sich unter anderem vorteilhaft aus, dass der Stützring mechanisch stabil ist und meist aus einem verhältnismäßig schweren Material besteht.

Insbesondere kann es vorteilhaft sein, über den Kurzschlussring axial überstehende Teile des randnahen Bereichs als Kühlfluid fördernde Schaufeln auszubilden. Rotoren von Asynchronmaschinen können während des Betriebs aufgrund von Verlustwärme hohe Temperaturen erreichen, sodass es vorteilhaft oder notwendig sein kann, sie zu kühlen. Hierzu können Teile des Rotors mit einem Kühlfluid, beispielsweise einem Gas wie z.B. Luft oder einer Flüssigkeit wie z.B. Öl oder Wasser, umspült werden. Bewegte Schaufeln können dazu dienen, das Kühlfluid umzuwälzen. Axial überstehende Teile des randnahen Bereichs des Stützscheibe können hierzu derart geeignet umgeformt und/oder gebogen werden, dass sie als Schaufeln wirken, während sie mit dem Rotor zusammen in eine drehende Bewegung versetzt werden.

Es wird darauf hingewiesen, dass einige der möglichen Merkmale und Vorteile der Erfindung hierin mit Bezug auf unterschiedliche Ausführungsformen beschrieben sind. Ein Fachmann erkennt, dass die Merkmale in geeigneter Weise kombiniert, angepasst oder ausgetauscht werden können, um zu weiteren Ausführungsformen der Erfindung zu gelangen.

### Kurze Beschreibung der Zeichnungen

Nachfolgend werden Ausführungsformen der Erfindung unter Bezugnahme auf die beigefügten Zeichnungen beschrieben, wobei weder die Zeichnungen noch die Beschreibung als die Erfindung einschränkend auszulegen sind.
Fig. 1 zeigt eine perspektivische Ansicht auf ein Lamellenpaket für einen Käfigläufer.
Fig. 2 zeigt eine teilweise Querschnittsansicht durch einen Käfigläufer einer Asynchronmaschine mit einer von außen einen Kurzschlussring umgreifenden Sicherungsscheibe gemäß einer Ausführungsform der Erfindung.
Fig. 3 zeigt eine teilweise Querschnittsansicht durch einen Käfigläufer einer Asynchronmaschine mit einer teilweise in einen Kurzschlussring integrierten Sicherungsscheibe gemäß einer alternativen Ausführungsform der Erfindung.
Fig. 4 zeigt eine teilweise Querschnittsansicht durch einen Käfigläufer einer Asynchronmaschine mit einer teilweise als Förderschaufel ausgebildeten Sicherungsscheibe gemäß noch einer alternativen Ausführungsform der Erfindung.

Die Figuren sind lediglich schematisch und nicht maßstabsgetreu. Gleiche Bezugszeichen bezeichnen in den Figuren gleiche oder gleichwirkende Merkmale.

### Ausführungsformen der Erfindung

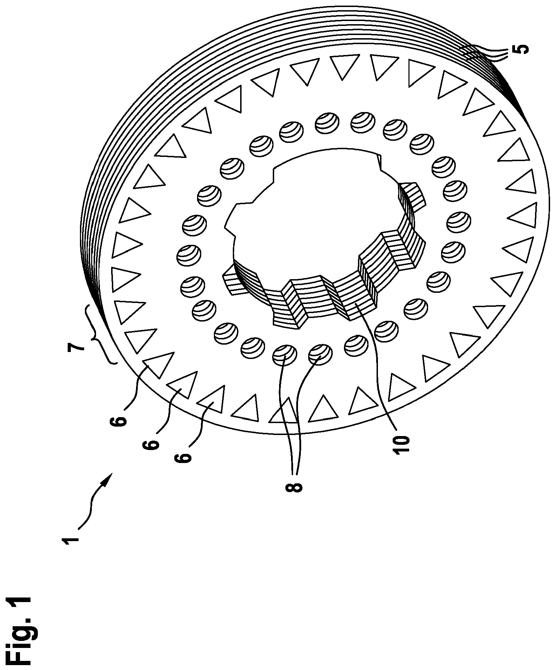

Fig. 1 zeigt eine perspektivische Ansicht auf ein Lamellenpaket 7 für einen Käfigläufer 1 einer Asynchronmaschine. Mehrere Blechlamellen 5 sind axial nebeneinander gestapelt. Jede einzelne Blechlamelle 5 wurde zuvor durch Freistanzen in eine geeignete Form gebracht. Dabei wurden nahe einem Außenumfang eine Vielzahl von Ausnehmungen 6 (in Fig. 1 grob schematisiert dargestellt) oder Nuten freigestanzt, durch die später Kurzschlussstäbe eines Kurzschlusskäfigs verlaufen können. Weitere Ausnehmungen 8 können als Kühlkanäle dienen. Zentral ist eine große Ausnehmung 10 vorgesehen, durch die hindurch eine Welle angeordnet werden kann.

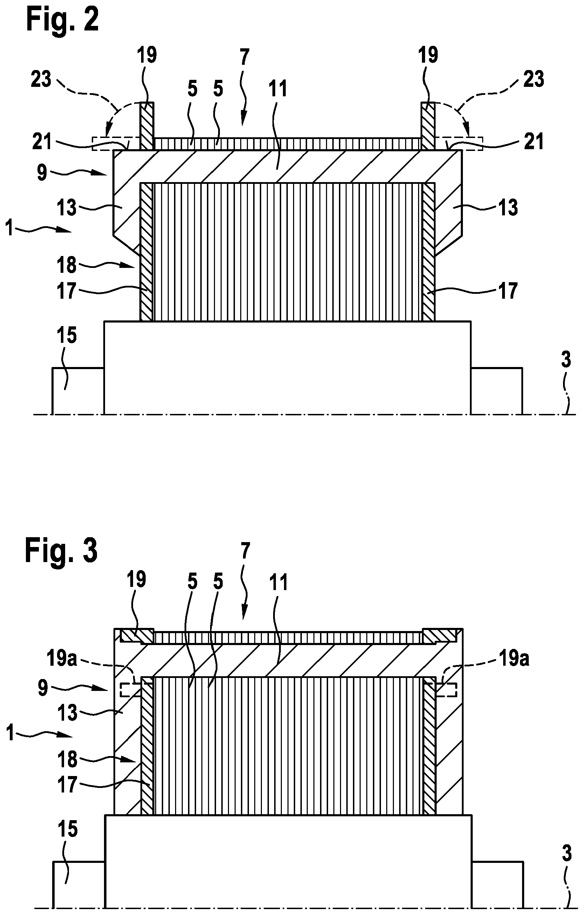

Fig. 2 zeigt eine Querschnittsansicht durch eine obere Hälfte eines Käfigläufers 1 einer Asynchronmaschine, der innerhalb eines Stators um eine Achse 3 rotieren kann.

Eine Vielzahl von axial nebeneinander gestapelten Blechlamellen 5 bildet ein Lamellenpaket 7. Jede Blechlamelle 5 erstreckt sich in einer Ebene orthogonal zur Achse 3, d.h. in radialer Richtung. Jede Blechlamelle weist eine Dicke von beispielsweise 0,3 bis 0,4mm auf und wurde zuvor in eine geeignete Form gestanzt. Dabei wurden unter anderem die Ausnehmungen 6 bzw. Nuten eingebracht, durch die beim fertig montierten Käfigläufer Kurzschlussstäbe 11 eines Kurzschlusskäfigs 9 verlaufen sollen. Das Lamellenpaket 7 ist auf eine Welle 15 gepresst, welche sich axial durch die zentrale Ausnehmung 10 der Blechlamellen 5 erstreckt.

An beiden Stirnseiten des Lamellenpakets 7 sind jeweils Stützscheiben 17 vorgesehen. Die Stützscheiben 17 weisen eine höhere mechanische Festigkeit auf als die Blechlamellen 5. Beispielsweise können die Stützscheiben 17 dicker als die Blechlamellen 5 sein oder aus einem stabileren Material bestehen.

Bei der in Fig. 2 dargestellten Ausführungsform sind in den Stützscheiben 17 an den gleichen Positionen Ausnehmungen vorgesehen, wie in dem Lamellenpaket 7, sodass diese Ausnehmungen jeweils miteinander fluchten und eine Art Kanal bilden. Durch die Ausnehmungen hindurch können Stäbe des Kurzschlusskäfigs angeordnet werden, ohne dass ein elektrischer Fluss gestört würde.

Um anschließend den Kurzschlusskäfig 9 zu bilden, kann um das Lamellenpaket 7 herum eine Form gebildet werden, in die dann ein den Kurzschlusskäfig 9 bildendes Material wie z.B. Kupfer oder Aluminium im flüssigen Zustand und unter hohem Druck eingegossen werden kann. Die Form wird dabei derart gewählt, dass beim Druckgießen vorzugsweise gleichzeitig sowohl die Kurzschlussstäbe 11 als auch an den Stirnseiten des Lamellenpakets 7 Kurzschlussringe 13, welche die Kurzschlussstäbe 11 elektrisch miteinander verbinden, d.h. kurzschließen, gegossen werden.

Nach dem Druckgießen des Kurzschlusskäfigs 9 erstrecken die Stützscheiben 17 sich somit zumindest in einem Zentralbereich 18 jeweils zwischen einer axial äußersten Blechlamelle 5 und dem benachbarten Kurzschlussring 13. Der Zentralbereich 18 ist somit im Wesentlichen eben und verläuft parallel zu den Blechlamellen 5.

Bei der in Fig. 2 dargestellten Ausführungsform ragt ein randnaher Bereich 19 an einem radial äußeren Ende der Stützscheiben 17 radial über den Kurzschlusskäfig 9 hinaus. Dieser randnahe Bereich 19 kann anschließend derart umgebogen werden, dass er sich an eine radial außenliegende Oberfläche 21 des Kurzschlussrings 13 anlegt. Dies ist in Figur 1 gestrichelt dargestellt und mit dem Pfeil 23 veranschaulicht.

Alternativ kann die Stützscheibe 17 bereits vorab als vorgefertigtes Stanzbiegebauteil oder tiefgezogenes Bauteil mit einem aus einer Ebene heraus gebogenen randnahen Bereich 19 geeigneter Abmessungen bereitgestellt und an das Lamellenpaket 5 stirnflächig angelagert werden.

Der randnahe Bereich 19 umgreift im fertiggestellten Kurzschlussläufer den Kurzschlussring 13 somit von radial außen her und stützt ihn somit gegenüber Fliehkräften ab.

Bei der in Fig. 3 dargestellten Ausführungsform ragt ein randnaher Bereich 19 an einem radial äußeren Ende der Stützscheiben 17 nicht radial über den Kurzschlusskäfig 9 hinaus. Stattdessen wird in diesem Fall der randnahe Bereich 19 kleiner bemessen und schon vor dem Druckgießen des Kurzschlusskäfigs 9 von dem Lamellenpaket 7 weg umgebogen.

Beim Druckgießen des Kurzschlusskäfigs 9 wird dieser randnahe Bereich 19 dann mit eingegossen. Im fertigen Kurzschlusskäfig 9 ist somit der umgebogene randnahe Bereich 19 der Stützscheibe 17 integral aufgenommen und erstreckt sich näherungsweise axial, d.h. parallel zur Achse 3. Da sich der randnahe Bereich 19 nahe dem Außenumfang des Kurzschlussrings 13 befindet, kann er diesen gut gegenüber Fliehkräften stabilisieren.

Alternativ kann der randnahe Bereich 19a auch vor dem Druckgießen bereits radial innerhalb der Ausnehmungen für die Kurzschlussstäbe 11 in eine Axialrichtung umgebogen werden, wie dies gestrichelt in Fig. 3 dargestellt ist. Anders ausgedrückt wird der Teil der Stützscheibe 17, in dem bei den Blechlamellen die Ausnehmungen bzw. Nuten vorgesehen sind, in diesem Fall nicht aus der Stützscheibe 17 weggestanzt sondern lediglich in eine Axialrichtung umgebogen.

In beiden Ausgestaltungen wird der randnahe Bereich 19 bzw. 19a derart ausgebildet bzw. umgebogen, dass die für die Kurzschlussstäbe vorgesehenen Ausnehmungen in dem Lamellenpaket 7 nicht abgedeckt werden, da ansonsten deren Querschnitt und somit ein elektrischer Fluss in diesem Bereich behindert werden könnte.

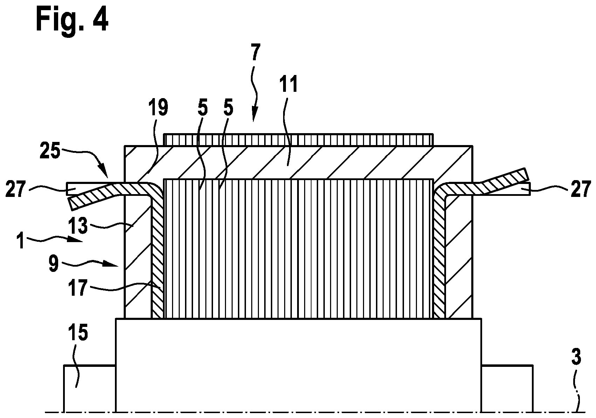

Die in Fig. 4 dargestellte Ausführungsform ähnelt in vielen Aspekten derjenigen aus Fig. 2. Der randnahe Bereich 19 wurde auch hier bereits vor dem Druckgießen des Kurzschlusskäfigs 9 umgebogen. Allerdings wurde die gesamte Stützscheibe 17 und somit auch der randnahe Bereich 19 größer, d.h. insbesondere mit einem größeren Durchmesser, dimensioniert, sodass der randnahe Bereich 19 nach dem Druckgießen des Kurzschlusskäfigs 9 axial über den Kurzschlussring 13 in einer Richtung weg von dem Lamellenpaket 7 hinaus ragt.

Dieser über den Kurzschlussring 13 hinaus ragende Teil 25 des randnahen Bereichs 19 kann anschließend weiter bearbeitet werden. Insbesondere kann der hinaus ragende Teil 25 geeignet umgeformt werden, um Schaufeln 27 zu bilden, welche, wenn sie mit dem Käfigläufer 1 beim Betrieb rotiert werden, ein Kühlfluid an den Stirnflächen des Käfigläufers 1 fördern oder umwälzen können. Dabei sollte der hinaus ragende Teil 25 wegen des Druckgussprozesses zunächst axial ausgerichtet sein, um ein Fügen und Dichten im Werkzeug zu ermöglichen. Nach einer Abkühlphase des den Kurzschlusskäfig bildenden Materials, beispielsweise des Aluminiums, kann dann in einem Biegeprozess der überstehende Bereich zu Schaufeln umgeformt, beispielsweise verdreht, werden, um eine strömungsgünstige Form einzunehmen.

Abschließend ist darauf hinzuweisen, dass Begriffe wie "aufweisend", "umfassend", etc. keine anderen Elemente oder Schritte ausschließen und Begriffe wie "eine" oder "ein" keine Vielzahl ausschließen. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

## Patentansprüche

1. Käfigläufer (1) für eine elektrische Asynchronmaschine, aufweisend:
ein Lamellenpaket (7) aus einer Vielzahl von in Axialrichtung nebeneinander gestapelten Blechlamellen (5);
einen Kurzschlusskäfig (9);
wobei sich Kurzschlussstäbe (11) des Kurzschlusskäfigs (9) in Axialrichtung durch das Lamellenpaket (7) erstrecken und jeweils durch einen Kurzschlussring (13) an Stirnflächen des Lamellenpakets (7) miteinander verbunden sind;
Wobei axial zwischen einem der Kurzschlussringe (13) und einer benachbarten axial äußersten der Blechlamellen (5) eine Stützscheibe (17) angeordnet ist, welche in einem Zentralbereich (18) parallel zu den Blechlamellen (5) ausgebildet ist und welche in einem randnahen Bereich (19) axial weg von dem Lamellenpaket (7) umgebogen ist,
**dadurch gekennzeichnet, dass**
der randnahe Bereich (19) durch den angrenzenden Kurzschlussring (13) hindurch verläuft und in Axialrichtung über den Kurzschlussring (13) übersteht und dass die über den Kurzschlussring (13) axial überstehende Teile (25) des randnahen Bereichs als Kühlfluid fördernde Schaufeln (27) ausgebildet sind.

2. Käfigläufer nach Anspruch 1, wobei die Stützscheibe (17) eine höhere mechanische Festigkeit aufweist als die Blechlamellen (5).

3. Käfigläufer nach Anspruch 1 oder 2, wobei die Stützscheibe (17) eine größere Dicke aufweist als die Blechlamellen (5).

4. Käfigläufer nach einem der Ansprüche 1 bis 3, wobei die Stützscheibe (17) aus einem mechanisch stabileren Material besteht als die Blechlamellen (5).

5. Käfigläufer nach einem der Ansprüche 1 bis 4, wobei die Stützscheibe (17) aus einem mechanisch stabileren Material besteht als die Kurzschlussringe (13).

6. Käfigläufer nach einem der Ansprüche 1 bis 5, wobei die Stützscheibe (13) ein Stanzbiegebauteil oder ein tiefgezogenes Bauteil ist.

7. Käfigläufer nach einem der Ansprüche 1 bis 6, wobei die Stützscheibe (13) nahe dem Außenrand derart umgebogen ist, dass sich der randnahe Bereich (19) in Axialrichtung erstreckt.

## Claims

1. Squirrel-cage rotor (1) for an electrical asynchronous machine, having:
a laminated core (7) comprising a large number of sheet-metal laminates (5) stacked next to one another in the axial direction;
a squirrel cage (9);
wherein short-circuiting bars (11) of the squirrel cage (9) extend through the laminated core (7) in the axial direction and are each connected to one another by a short-circuiting ring (13) at end faces of the laminated core (7);
wherein a supporting disc (17) is arranged axially between one of the short-circuiting rings (13) and an adjacent axially outermost one of the sheet-metal laminates (5), which supporting disc is formed parallel to the sheet-metal laminates (5) in a central region (18) and is bent axially away from the laminated core (7) in a region (19) close to the edge,
**characterized in that**
the region (19) close the edge runs through the adjoining short-circuiting ring (13) and projects beyond the short-circuiting ring (13) in the axial direction, and **in that** the parts (25) of the region close to the edge which project axially beyond the short-circuiting ring (13) are designed as vanes (27) which convey cooling fluid.

2. Squirrel-cage rotor according to Claim 1, wherein the supporting disc (17) has a greater mechanical strength than the sheet-metal laminates (5).

3. Squirrel-cage rotor according to Claim 1 or 2, wherein the supporting disc (17) has a greater thickness than the sheet-metal laminates (5).

4. Squirrel-cage rotor according to one of Claims 1 to 13, wherein the supporting disc (17) consists of a material that is mechanically more stable than the sheet-metal laminates (5).

5. Squirrel-cage rotor according to one of Claims 1 to 4, wherein the supporting disc (17) consists of a material that is mechanically more stable than the short-circuiting rings (13).

6. Squirrel-cage rotor according to one of Claims 1 to 5, wherein the supporting disc (13) is a stamped-and-bent component or a deep-drawn component.

7. Squirrel-cage rotor according to one of Claims 1 to 6, wherein the supporting disc (13) is bent away close to the outer edge in such a way that the region (19) close to the edge extends in the axial direction.

## Revendications

1. Rotor à cage (1) destiné à une machine asynchrone électrique, présentant :
un empilage de lamelles (7) composé d'une pluralité de lamelles de tôle empilées les unes à côté des autres dans une direction axiale (5) ;
une cage d'écureuil (9) ;
dans lequel des barres de court-circuit (11) de la cage d'écureuil (9) s'étendent dans la direction axiale à travers l'empilage de lamelles (7) et sont reliées les unes aux autres respectivement par une bague de court-circuit (13) au niveau des faces frontales de l'empilage de lamelles (7) ;
dans lequel, axialement entre l'une des bagues de court-circuit (13) et une lamelle voisine, axialement la plus à l'extérieur des lamelles de tôle (5), un disque d'appui (17) est disposé qui est réalisé dans une zone centrale (18) en parallèle aux lamelles de tôle (5) et qui est replié axialement dans une zone près du bord (19) en s'éloignant de l'empilage de lamelles (7),
**caractérisé en ce que** la zone près du bord (19) s'étend à travers la bague de court-circuit adjacente (13) et dépasse de la bague de court-circuit (13) dans la direction axiale, et **en ce que** les parties (25) de la zone près du bord, dépassant axialement de la bague de court-circuit (13), sont réalisées sous la forme d'aubes (27) débitant du fluide de refroidissement.

2. Rotor à cage selon la revendication 1, dans lequel le disque d'appui (17) présente une résistance mécanique supérieure à celle des lamelles de tôle (5).

3. Rotor à cage selon la revendication 1 ou 2, dans lequel le disque d'appui (17) présente une épaisseur supérieure à celle des lamelles de tôle (5).

4. Rotor à cage selon l'une quelconque des revendications 1 à 3, dans lequel le disque d'appui (17) est composé d'un matériau mécaniquement plus stable que celui des lamelles de tôle (5).

5. Rotor à cage selon l'une quelconque des revendications 1 à 4, dans lequel le disque d'appui (17) est composé d'un matériau mécaniquement plus stable que celui des bagues de court-circuit (13).

6. Rotor à cage selon l'une quelconque des revendications 1 à 5, dans lequel le disque d'appui (13) est une pièce découpée et pliée ou une pièce emboutie.

7. Rotor à cage selon l'une quelconque des revendications 1 à 6, dans lequel le disque d'appui (13) est replié près du bord extérieur de telle sorte que la zone près du bord (19) s'étend dans la direction axiale.
